Europäisches Patentamt

European Patent Office

Office européen des brevets

(11) Numéro de publication: **0 254 705**
A2

# DEMANDE DE BREVET EUROPEEN

(21) Numéro de dépôt: 87870102.8

(22) Date de dépôt: 20.07.87

(51) Int. Cl.⁴: **B 29 C 67/22**
C 08 J 9/10, C 08 L 23/02

(30) Priorité: 25.07.86 LU 86529   25.07.86 LU 86528

(43) Date de publication de la demande:
27.01.88   Bulletin   88/04

(84) Etats contractants désignés:
BE DE FR GB IT NL

(71) Demandeur: LABOFINA S.A.
52, rue de l'Industrie
B-1040 Bruxelles  (BE)

(72) Inventeur: Haveaux, Bernard
Rue de Bruxelles, 51
B-1400 Nivelles  (BE)

Siraux, Daniel
Rue de Glatimont, 133
B-7401 Soignies  (BE)

(54) **Procédé de production de mousse de polyoléfines réticulées et mousses ainsi obtenues.**

(57) On décrit un procédé pour produire des mousses de polyéthylène réticulé ou non, ayant des propriétés mécaniques améliorées ainsi que des petites cellules. Le procédé consiste à utiliser comme polyéthylène, un polyéthylène linéaire basse densité, ayant une densité inférieure à 0,910, à extruder ce polyéthylène avec les additifs thermosensibles à une température ne dépassant pas 135°C, pour former une feuille de composition homogène, et à dérouler cette feuille dans un four à température élevée pour permettre l'expansion et la réticulation du polyéthylène.

EP 0 254 705 A2

Bundesdruckerei Berlin

**Description**

PROCEDE DE PRODUCTION DE MOUSSE DE POLYOLEFINES RETICULEES ET MOUSSES AINSI OBTENUES

La présente invention se rapporte à un procédé de production de mousse de polyoléfines réticulées ou non. Plus particulièrement, l'invention concerne un procédé de production de mousse de polyéthylène réticulé ou non ayant des propriétés mécaniques améliorées et des petites cellules.

Généralement, les mousses de polyoléfines réticulées, et en particulier celles de polyéthylène réticulé sont produites en deux étapes. Au cours de la première étape, on introduit dans une extrudeuse une composition qui comprend la polyoléfine et quelques additifs, la quantité requise d'agent gonflant, pris le plus souvent sous forme solide, et d'agent réticulant, on chauffe le mélange de manière à ramollir la polyoléfine et à parfaitement incorporer tous les additifs et autres agents thermosensibles dans la polyoléfine. On extrude ce mélange sous forme d'une feuille, qui au cours de la seconde étape sera introduite dans un four à haute température, de manière à réaliser l'expansion, par décomposition de l'agent gonflant, et la réticulation chimique, par l'action de l'agent réticulant, le plus souvent un péroxyde.

On comprendra aisément que dans un tel type de procédé, ni l'agent gonflant ni l'agent réticulant, ne peuvent se décomposer au cours de l'extrusion de la première étape.

Ceci implique que l'extrusion de la première étape doit être réalisée à basse température et notamment à une température inférieure à celle de décomposition de l'agent gonflant ou de l'agent réticulant . Le plus souvent, on doit extruder à une température inférieure à environ 135°C.

Or, il est bien connu dans le domaine du polyéthylène réticulé, que le polyéthylène linéaire basse densité (ci-après LLDPE) apporte une amélioration des propriétés mécaniques des mousses abtenues, comme d'ailleurs décrit dans la demande de brevet japonais 59135236.

Il serait dès lors intéressant d'utiliser ce type de polyoléfine pour fabriquer les mousses de polyéthylène réticulé; mais en général il est difficilement extrudable à des températures inférieures à 135°C.

Pour palier cet inconvénient dû aux agents thermosensibles, on a déjà proposé de réaliser la réticulation par irradiation, après l'extrusion; cependant, ce procédé est extrêmement coûteux. De plus, on a constaté qu'avec un procédé par irradiation, on est limité à de petites épaisseurs de mousse à traiter, car il y a un gradient de réticulation.

Il est connu également d'utiliser de 0,5 à 5 % d'un polymère fluoré, comme le teflon, pour faciliter l'extrudabilité du LLDPE. Cependant, cela s'est révélé totalement inefficace à des températures aussi basses que 135°C.

Il est donc nécessaire de pouvoir disposer d'un procédé d'extrusion à basse température permettant d'utiliser la réticulation par voie chimique. Ceci est également important pour la production de mousses d'épaisseurs plus importantes, qui ne peuvent pas être réticulées par irradiation.

Il est également important de pouvoir obtenir des mousses ayant des petites cellules, parce qu'elles favorisent de meilleures propriétés mécaniques dont la résistance à la compression, l'écrasement résiduel. Elles favorisent également une plus basse conductivité thermique. Elles ont également un aspect visuel attractif.

La présente invention a pour but de remédier aux inconvénients mentionnés ci-dessus.

La présente invention a pour objet un procédé pour extruder à basse température une composition destinée à produire une mousse de polyéthylène réticulé ou non, sans qu'il y ait risque de décomposition des agents thermosensibles.

La présente invention a également pour objet d'obtenir au moyen du procédé de l'invention, une mousse de polyéthylène réticulé ou non qui a des propriétés mécaniques améliorées, ainsi que de petites cellules.

Le procédé de la présente invention pour produire des mousses de polyéthylène réticulé ou non, en deux étapes, comprenant l'extrusion d'une composition contenant le polyéthylène et les additifs thermosensibles pour former une feuille de composition homogène, et le déroulement de cette feuille dans un four à température élevée afin de permettre l'expansion et la réticulation du polyéthylène, est caractérisé en ce que, lors de la première étape,
- on introduit dans une extrudeuse un polyéthylène linéaire basse densité ayant une densité inférieure à 0, 910 et un indice de fluidité inférieur à 3 g/10min.;
- on introduit simultanément dans l'extrudeuse, de manière à le mélanger intimement avec la composition de polyéthylène qui y circule, 2,5 à 25 parties d'agent gonflant et 0 à 2 parties d'agent réticulant, (calculé pour 100 parties de polyéthylène).
- on chauffe ce polyéthylène à une température suffisante pour le ramollir, sans pour autant dépasser 135°C;
- on extrude une feuille de composition homogène à une température qui ne dépasse pas 135 °C;
- on enroule la feuille ainsi obtenue pour la transférer: et lors de la seconde étape,
- on déroule la feuille obtenue à la première étape, et on la fait passer dans un four selon un profil de températures s'échelonnant entre 140 et 260 °C;
- on réalise dans le four l'expansion et la réticulation de la feuille de polyéthylène traité;
- on récupère à la sortie du four la feuille de mousse de polyéthylène réticulé ou non ayant des cellules d'une dimension moyenne inférieure à 0,4 mm.

On détermine la taille des cellules en comptant le nombre de cellules se trouvant sur une distance donnée. On divise ensuite cette distance par le nombre de cellules compté (ASTM).

La Demanderesse a trouvé d'une manière tout a fait inattendue qui si l'on utilise un polyéthylène linéaire basse densité ayant des caractéristiques de densité et d'indice d'écoulement bien définis, on pouvait aisément réaliser l'extrusion de la composition de polyéthylène et d'agents thermosensibles à une température inférieure à 135°C et même inférieure à 130°C.

De plus, la Demanderesse a également trouvé que la mousse produite avec ce type particulier de polyéthylène linéaire basse densité avait non seulement des propriétés mécaniques améliorées, mais également de petites cellules, dont la dimension moyenne est inférieure à 0,4 mm et le plus souvent inférieure à 0,3 mm.

La Demanderesse a maintenant trouvé que pour extruder un mélange de polyéthylène avec des agents thermosensibles, à une température inférieure à environ 135°C, il fallait absolument utiliser un polyéthylène linéaire basse densité dont la densité est inférieure à 0,910 et dont l'indice d'écoulement est inférieur à 3 gr/10 min. (à 190 °C sous 2,16 Kg).

Généralement, on utilise un polyéthylène linéaire basse densité qui est un copolymère d'éthylène et de butène, bien que d'autres copolymères puissent être utilisés comme les copolymères éthylène-hexène et éthylène-octène.

On a constaté qu'avec des polyéthylènes linéaires basse densité ne répondant pas aux critères ci-dessus, on ne parvient pas à extruder la composition à une température aussi basse que 135°C.

Il faut signaler que lorsque l'agent réticulant se décompose lors de la première extrusion, il y a blocage des vis de l'extrudeuse, ce qui entraîne un arrêt complet de l'installation.

Selon un mode d'exécution du procédé de l'invention, on introduit du polyéthylène linéaire basse densité d'une densité inférieure à 0,910 et de préférence inférieure à 0,905, dans la trémie d'alimentation de l'extrudeuse. L'extrudeuse est munie d'un système de chauffage qui donne un profil de température entre l'entrée et la filière s'échelonnant notamment de 105 °C - 110 °C - 120 °C à 125°C.

On ajoute également dans l'extrudeuse, de 0 à 2 parties pour 100 parties de polyéthylène, d'un agent réticulant, et de 2,5 à 25 parties pour 100 parties de polyéthylène, d'un agent gonflant.

A titre d'exemples d'agent réticulant, on peut notamment utiliser les peroxydes dont le temps de demi-vie à 120 °C est compris entre 20 heures et 20 minutes. Comme exemples typiques de tels peroxydes, on peut citer le peroxyde de dicumyle, le peroxyde de di-tert-butyle, le perbenzoate de tert-butyle, le perocétate de tert-butyle et le di-tert-butyle peroxy-3-,3,5-triméthylcyclohexane.

A titre d'exemple d'agent gonflant, on peut notamment citer le para-toluène sulfonyle hydrazide, l'azodicarbonamide, et l'oxy bis (benzène sulfonyle hydrazide), le aminopentaméthyltétramine, utilisé seul ou en présence d'activateurs ou d'agents de coréticulation.

On peut également ajouter lors de l'extrusion, des agents ignifugeants à raison de 10 à 15 parties pour 100 parties de polyéthylène, ainsi que des pigments à raison de 0,05 à 1,5 parties pour 100 parties de polyéthylène.

L'extrusion peut s'effectuer aussi bien sur un système monovis que double vis.

Bien que l'on puisse extruder un mélange comprenant les agents thermosensibles, les additifs usuels et un ou plusieurs polyéthylène linéaire basse densité ayant les propriétés requises, la Demanderesse a trouvé qu'il était possible d'extruder dans les conditions préconisées des mélanges comprenant de 70 à 100% en poids de polyéthylène linéaire basse densité de l'invention et de 0 à 30% en poids d'un polyéthylène choisi parmi les polyéthylènes basse densité ayant une densité comprise entre 0,900 et 0,930 et de préférence entre 0,918 et 0,923 et un indice d'écoulement compris entre 3 et 5 g/10 min., et les copolymères éthylène-acétate de vinyle, éthylène-propylène-diène (EPDM) et éthylène-propylène (EPM).

A la sortie de l'extrudeuse, on enroule les feuilles de composition homogène, et on les refroidit avant de les transférer à la ligne d'expansion.

Les rouleaux de feuilles de polyéthylène linéaire basse densité contenant les agents gonflants et réticulants ainsi que d'autres additifs comme des colorants et agents ignifugeants sont transférés en tête de la ligne d'expansion. On déroule la feuille à plat et on l'introduit dans un four chauffé à une température comprise entre 140 et 260°C, de préférence entre 190 et 240°C et en tout état de cause à une température suffisante pour décomposer les agents gonflants et les agents de réticulation.

L'expansion et la réticulation de la mousse se réalisent et on soutire du four une feuille de mousse réticulée ou non selon la présence ou non d'un agent réticulant.

De plus, on a constaté qu'avec le polyéthylène linéaire basse densité de l'invention, on obtenait une mousse qui avait des dimensions de cellules inférieures à environ 0,4 mm, alors qu'avec d'autres polyéthylènes, ces dimensions ne descendent jamais en dessous de environ 0,5 à 0,7 mm.

Avec le procédé de l'invention on a constaté que l'on effectuait plus aisément le thermoformage des pièces profondes, alors que l'on obtenait des plissements ou des déchirures avec des mousses réticulées par irradiation.

Les exemples suivants sont donnés afin de mieux illustrer le procédé de l'invention.

Exemple 1

On introduit dans une extrudeuse 100 parties en poids d'un polyéthylène linéaire basse densité ayant une densité de 0,905 et un indice d'écoulement de 2,6 g/10 min.

On ajoute simultanément dans l'extrudeuse 4, 6 parties en poids d'azodicarbonamide et 1 partie en poids de peroxyde de dicumyle.

On extrude ce mélange selon le profil de températures suivant : 105 °C (entrée) - 110 °C - 120 °C - 128 °C (filière).

On obtient une feuille d'une épaisseur de 1,64 mm et d'une largeur de 0,735 m, à une vitesse de 0,8 m/min. L'extrusion à basse température s'est parfaitement déroulée.

La feuille obtenue à l'extrudeuse a été enroulée en rouleau, que l'on a déroulé dans un four dont la température à l'entrée était de 182 °C et la température à la sortie de 241 °C.

On a ainsi réalisé l'expansion et la réticulation du polyéthylène linéaire basse densité, la mousse obtenue avait les caractéristiques suivantes :
Epaisseur : 3,5 mm
Largeur : 1,5 mm
Masse volumique : 140 Kg/m3
Taille des cellules : 0,3 mm
Traction à la rupture
sens perpendiculaire : 160 N/cm2 à 300 % d'allongement
sens parallèle : 175 N/cm2 à 290 % d'allongement
Compression à 40 % : 10,6 N/cm2
Essai de déchirure
sens perpendiculaire : 165 N/cm
sens parallèle : 160 N/cm.

On remarque qu'il y a uniformité des résultats dans les deux sens.

A titre de comparaison, on a utilisé un polyéthylène linéaire basse densité non conforme aux conditions de l'invention; en effet ce LLDPE avait une densité de 0,920 et un indice d'écoulement de 2.

On a introduit 100 parties en poids de celui-ci dans l'extrudeuse simultanément avec 4,6 parties d'azodicarbonamide et 1 partie de peroxyde de dicumyle.

On constate que l'on ne peut pas travailler à des températures aussi faibles, et on a dû extruder à 145 °C; cependant après 5 minutes, la filière était complètement colmatée.

A titre de comparaison, on a utilisé en lieu et place du LLPDE de l'invention, un polyéthylène basse densité de densité 0,923 et d'indice d'écoulement 4 g/10 min. On a extrudé selon le même profil de température que celui décrit ci-dessus, le mélange de polyéthylène basse densité, d'azodicarbonamide et de peroxyde de dicumyle.

La feuille obtenue à l'extrusion a ensuite été expansée dans le four dans les mêmes conditions que celles mentionnées ci-dessus.

La mousse obtenue avait des cellules de 0,7 mm de dimension moyenne.

## Exemple 2

On a introduit dans une extrudeuse 70 parties en poids de polyéthylène linéaire basse densité (LLDPE) ayant une densité de 0,905 et un indice d'écoulement de 2,6 g/10 min., et 30 parties en poids d'un polyéthylène basse densité ayant une densité de 0,923 et un indice d'écoulement de 4 g/10 min.

On ajoute simultanément dans l'extrudeuse 15 parties en poids d'azodicarbonamide et 1 partie en poids de peroxyde de dicumyle.

on extrude ce mélange selon le profil de températures suivant : 105 °C (entrée) -110 °C - 120 °C - 125 °C (filière).

On obtient une feuille d'une épaisseur de 2,65 mm et de 0,735 m de large. L'extrusion à basse température s'est parfaitement déroulée.

On a ensuite soumis la feuille à une expansion et une réticulation par passage dans un four dont la température à l'entrée était de 187 °C et la température à la sortie 232 °C.

La mousse obtenue avait les propriétés suivantes :

Epaisseur : 7,5 mm
Largeur : 1,5 m
Masse volumique : 37 Kg/m3

Traction à la rupture :
sens perpendiculaire : 51 N/cm2 à 200 % d'allongement
sens parallèle : 56 N/cm2 à 210 % d'allongement
Test de déchirure :
sens perpendiculaire : 43 N/cm
sens parallèle : 39 N/cm
Taille des cellules : 0,28 mm
$\lambda$ = 0,042 Watt/m. °K

Avec la mousse obtenue, on a thermoformé sans aucun pli des objets ayant un H/D (hauteur/diamètre) de 2, alors que pour le même objet obtenu au départ d'une mousse réticulée par voie physique il y a apparition de plissements.

A titre de comparaison, on a utilisé 100 parties en poids d'un LLDPE, ayant une densité de 0,923 et un indice d'écoulement de 4 g/10 min.

La mousse obtenue au départ de ce polyéthylène, avait les propriétés suivantes :
Traction à la rupture :
sens perpendiculaire : 22 N/cm2 à 100 % d'allongement
sens parallèle : 31 N/cm2 à 91 % d'allongement
Test de déchirure :
sens perpendiculaire : 40 N/cm
sens parallèle : 25 N/cm.
Taille des cellules : 0,7 mm de moyenne
$\lambda$ = 0,046 Watt/m.°K

Cet exemple comparatif montre clairement que l'on n'obtient pas la taille de cellule recherchée, ni les bonnes propriétés mécaniques. De plus, le $\lambda$ est plus élevé.

## Exemple 3

On a répété le mode opératoire décrit dans l'exemple 2, mais en utilisant cette fois 70 parties en poids d'un LLDPE, ayant une densité de 0,895 et un indice d'écoulement de 2 g/10 min. Le reste des conditions décrites dans l'exemple 2 a été maintenu. L'extrusion s'est parfaitement déroulée.

La mousse obtenue après passage dans le four, dans les mêmes conditions que celles de l'exemple 2, avait les propriétés suivantes :
Masse volumique : 40 Kg/m3
Taille des cellules : 0,19 mm.

## Revendications

1) Procédé pour produire des mousses de polyéthylène réticulé ou non, en deux étapes, comprenant l'extrusion d'une composition contenant le polyéthylène et les additifs thermosensibles pour former une feuille de composition homogène, et le déroulement de cette feuille dans un four à température élevée afin de permettre l'expansion et la réticulation du polyéthylène, caractérisé en ce que, lors de la première étape,
- on introduit dans une extrudeuse un polyéthylène linéaire basse densité ayant une densité inférieure à 0,910 et un indice d'écoulement inférieur à 3 g/10 min.;
- on introduit simultanément dans l'extrudeuse, de manière à le mélanger intimement avec la composition de polyéthylène qui y circule, 2,5 à 25 parties d'agent gonflant et 0 à 2 parties d'agent réticulant, (calculé pour 100 parties de polyéthylène);

- on chauffe ce polyéthylène à une température suffisante pour le ramollir, sans pour autant dépasser 135 °C;

- on extrude une feuille de composition homogène à une température qui ne dépasse pas 135 °C;

- on enroule la feuille ainsi obtenue pour la transférer; et lors de la seconde étape,

- on déroule la feuille obtenue à la première étape, et on la fait passer dans un four selon un profil de températures s'échelonnant entre 140 et 260 °C;

- on réalise dans le four l'expansion et la réticulation de la feuille de polyéthylène traité;

- on récupère à la sortie du four la feuille de mousse de polyéthylène réticulé ou non, ayant des cellules d'une dimension moyenne inférieure à 0,4 mm.

2) Procédé selon la revendication 1, caractérisé en ce que l'on utilise un polyéthylène linéaire basse densité ayant une densité inférieure à 0,905 et un indice d'écoulement inférieur à 3 g/10 min.

3) Procédé selon les revendications 1 et 2, caractérisé en en ce l'on utilise un mélange de polyéthylène comprenant de 70 à 100 % en poids d'un polyéthylène linéaire basse densité ayant une densité inférieure à 0,910 et un indice d'écoulement inférieur à 3 g/min., et de 0 à 30 % en poids d'un polyéthylène choisi parmi les polyéthylènes basse densité ayant une densité comprise entre 0,915 et 0,930 et un indice d'écoulement compris entre 3 et 5 g/10 min., les copolymères éthylène-acétate de vinyle, éthylène-propylène-diène (EPDM) éthylène-propylène (EPDM).

4) Procédé selon l'une quelconque des revendications 1 à 3 caractérisé en ce que lors de l'extrusion, on ajoute un agent ignifugeant et des pigments à raison de 10 à 15 parties et 0,05 à 1,5 parties respectivement pour 100 parties de polyéthylène.

5) Mousse de polyéthylène réticulé ou non obtenue selon le procédé décrit dans l'une quelconque des revendications 1 à 4.